# EUROPÄISCHE PATENTSCHRIFT

(11) **EP 2 451 549 B1**
(45) Veröffentlichungstag und Bekanntmachung des Hinweises auf die Patenterteilung: **03.09.2014**
(21) Anmeldenummer: 10728705.4
(22) Anmeldetag: 07.07.2010
(51) Int. Cl.: B01D 3/00, C01B 33/04

(54) **VERFAHREN UND ANLAGE ZUR HERSTELLUNG VON MONOSILAN**
METHOD AND SYSTEM FOR PRODUCING MONOSILANE
PROCÉDÉ ET INSTALLATION POUR LA FABRICATION DE MONOSILANE

(30) Priorität: 08.07.2009 DE 102009032833
(43) Veröffentlichungstag der Anmeldung: 16.05.2012
(73) Patentinhaber: Schmid Silicon Technology GmbH, 72250 Freudenstadt (DE)
(72) Erfinder: PETRIK, Adolf, 72250 Freudenstadt (DE); SCHMID, Christian, 72250 Freudenstadt (DE); HAHN, Jochem, 72108 Rottenburg (DE)
(74) Vertreter: Patentanwälte Ruff, Wilhelm, Beier, Dauster & Partner
(86) Internationale Anmeldenummer: PCT/EP2010/059748
(87) Internationale Veröffentlichungsnummer: WO 2011/003949

(56) Entgegenhaltungen:
- DE-A1- 3 412 705
- DE-A1- 10 017 168
- US-A1- 2002 177 741

## Beschreibung

Die vorliegende Erfindung betrifft eine Anlage zur Herstellung von Monosilan (SiH₄), die eine Reaktionskolonne mit einem Zulauf für Trichlorsilan und einem Ablauf für anfallendes Siliziumtretrachlorid (SiCl₄) sowie mindestens einen Kondensator, über den hergestelltes Monosilan aus der Reaktionskolonne abgeführt werden kann, umfasst. Weiterhin betrifft die vorliegende Erfindung ein Verfahren zur Herstellung von Monosilan durch katalytische Disproportionierung von Trichlorsilan.

Hochreines Silizium wird in der Regel in einem mehrstufigen Prozess ausgehend von metallurgischem Silizium, das einen relativ hohen Anteil an Verunreinigungen aufweisen kann, hergestellt. Zur Aufreinigung des metallurgischen Siliziums kann dieses beispielsweise in ein Trihalogensilan wie Trichlorsilan (SiHCl₃) überführt werden, das anschließend thermisch zu hochreinem Silizium zersetzt wird. Eine derartige Vorgehensweise ist beispielsweise aus der DE 29 19 086 bekannt. Alternativ dazu kann man hochreines Silizium auch durch thermische Zersetzung von Monosilan gewinnen, wie es z.B. in der DE 33 11 650 beschrieben ist.

Monosilan lässt sich insbesondere durch Disproportionierung von Trichlorsilan erhalten. Letzteres ist wiederum beispielsweise durch Umsetzung von metallurgischem Silizium mit Siliziumtetrachlorid und Wasserstoff herstellbar.

Um die Disproportionierung zu beschleunigen, können Katalysatoren eingesetzt werden. Besonders bewährt haben sich basische Katalysatoren wie z.B. die aus der DE 25 07 864 bekannten Aminverbindungen und Derivate. Diese werden bevorzugt in gebundener Form eingesetzt, wie es z.B. in der DE 33 11 650 beschrieben ist. An feste Träger gebundene Katalysatoren sind auf einfache Weise aus flüssigen oder gasförmigen Reaktionsgemischen abtrennbar. Im Fall von Aminverbindungen kann so ein Eintrag von verunreinigenden Aminen in das Silan/Chlorsilan-Gemisch vermieden werden kann. Aufgrund des damit verbundenen Vorteils werden heute bei der technischen Disproportionierung von Trichlorsilan praktisch nur noch entweder an Träger fixierte oder in vernetzte Polymere inkorporierte Aminkatalysatoren verwendet.

Unter anderem aus der DE 198 60 146 ist es bekannt, die Disproportionierung von Trichlorsilan nach dem Prinzip der Reaktivdestillation ablaufen zu lassen. Die Reaktivdestillation ist durch eine Kombination von Reaktion und destillativer Trennung in einem Apparat, insbesondere in einer Kolonne, gekennzeichnet. In diesem Apparat wird die jeweils leichtest siedende Komponente fortlaufend destillativ entfernt, wobei man versucht, in jedem Raumelement des Apparates stets ein optimales Gefälle zwischen Gleichgewichtszustand und tatsächlichem Gehalt an leichtersiedenden Komponenten bzw. leichtestsiedender Komponente aufrecht zu erhalten.

Die Vorteile der Reaktivdestillation lassen sich mit den Vorteilen der katalysierten Umsetzung von Trichlorsilan kombinieren. Dies kann dadurch erreicht werden, dass die Disproportionierung z.B. von Trichlorsilan zu Siliziumtetrachlorid und Monosilan in einer Kolonne ausgeführt wird, deren den Stoffaustausch ermöglichende Füllungen (Füllkörper, Einbauten etc.) mit katalytisch wirksamen Feststoffen verbunden sind. Insbesondere kann eine solche Kolonne einen katalytisch wirkenden Feststoff als Füllkörper enthalten.

Rücksicht genommen werden muss dabei natürlich auf die thermische Stabilität der verwendeten katalytisch aktiven Füllkörper. In der Regel basieren diese auf Polystyrol-Divinylbenzol-Harzen, die kommerziell erhältlich und relativ kostengünstig sind, bei Temperaturen knapp oberhalb 100 °C jedoch bereits instabil werden. Grundsätzlich gilt, dass sich die Disproportionierung von Trichlorsilan umso mehr beschleunigen lässt, je höher die Umsetzungstemperatur eingestellt wird. In der Praxis muss aufgrund der nur bedingten thermischen Stabilität des Katalysators aber ein Kompromiß eingegangen werden.

Aus der DE 100 17 168 A1 ist ein Verfahren zur Herstellung von Silan durch katalytische Disproportionierung von Trichlorsilan bekannt, bei welchem in einer senkrecht angeordneten Kolonne zwischen zwei übereinanderliegenden reaktiv/destillativen Bereichen mindestens ein Zwischenkondensator angeordnet ist. Die reaktiv/destillativen Bereiche enthalten Katalysatorbetten mit katalytisch aktiven, beispielweise Polyacrylsäure-basierten, Feststoffen. Die Zwischenkondensation bei Temperaturen oberhalb der Kondensationstemperatur des Silans bewirkt eine vorzeitige Wärmeabfuhr und verringert den Kühlaufwand bei der Silankondensation unterhalb der Kondensationstemperatur am Kolonnenkopf.

Die US 2002/0177741 A1 beschreibt ein reaktiv/destillatives Verfahren zur Umsetzung von Synthesegas zu Alkoholen in einem kolonnenförmigen Reaktor, der mehrere übereinanderliegende Reaktionsbereiche aufweist. Diese umfassen jeweils unterschiedliche Katalysatoren, die an die in den jeweiligen Reaktionsbereichen herrschenden Bedingungen angepasst sind. Bei den Katalysatoren handelt es sich insbesondere um geträgerte Metalle wie sie auch im Rahmen der Fischer-Tropsch Synthese Anwendung finden.

Aus der DE 34 12 705 DE geht ein Verfahren zur Disproportionierung von Trichlorsilan unter Verwendung eines Ionenaustauscherharzes hervor. Bei dem Harz handelt es sich beispielsweise um eine Divinylbenzolmatrix, in welche eine aromatische heterozyklische Base als funktionelle Gruppe, insbesondere Vinylpyridin, eingebettet ist. Das Harz lässt sich bis zu einer Temperatur von 200°C verwenden, ohne dass es zu einer Abspaltung der funktionellen Gruppe kommt.

Der der vorliegenden Anmeldung beschriebenen Erfindung lag die Aufgabe zugrunde, die bekannten Verfahren zur Disproportionierung von Trichlorsilan weiterzuentwickeln und zu verbessern, insbesondere im Hinblick auf die Geschwindigkeit der Umsetzung von Trichlorsilan.

Diese Aufgabe wird gelöst durch die Anlage zur Herstellung von Monosilan mit den Merkmalen des Anspruchs 1 sowie durch das Verfahren zur Herstellung von Monosilan mit den Merkmalen des Anspruchs 8. Bevorzugte Ausführungsformen der erfindungsgemäßen Anlage sind in den abhängigen Ansprüchen 2 bis 7 definiert. Bevorzugte Ausführungsformen des erfindungsgemäßen Verfahrens finden sich in den abhängigen Ansprüchen 9 bis 13. Der Wortlaut sämtlicher Ansprüche wird hiermit durch Bezugnahme zum Inhalt dieser Beschreibung gemacht.

In einer erfindungsgemäße Anlage zur Herstellung von Monosilan wird wie in beinahe allen gattungsgemäßen Anlagen Monosilan durch katalytische Disproportionierung von Trichlorsilan hergestellt. Die erfindungsgemäße Anlage umfasst stets mindestens eine Reaktionskolonne, die einen Zulauf für Trichlorsilan sowie einen Ablauf für bei der Disproportionierung anfallendes Siliziumtetrachlorid aufweist. Des weiteren umfasst die Anlage mindestens einen Kondensator, über den hergestelltes Monosilan bzw. monosilanhaltiges Produktgemisch aus der Reaktionskolonne abgeführt werden kann.

Besonders zeichnet sich die mindestens eine Reaktionskolonne dabei dadurch aus, dass sie mindestens zwei reaktiv/destillative Reaktionsbereiche aufweist, die bei unterschiedlichen Temperaturen betrieben werden und die unterschiedliche katalytisch wirkende Feststoffe enthalten.

Das Prinzip der Reaktivdestillation wurde eingangs bereits erwähnt. Auch in der Reaktionskolonne einer erfindungsgemäßen Anlage zur Herstellung von Monosilan kommt dieses Prinzip zum Einsatz. So erfolgt in jedem der reaktiv/ destillativen Reaktionsbereiche eine Umsetzung unter fortwährender Abführung der Leichtsieder. Diese können dann in einem nachgeschalteten reaktiv/ destillativen Reaktionsbereich zur weiteren Umsetzung überführt werden, o-der aber man führt sie direkt dem erwähnten mindestens einen Kondensator (auf dessen Funktion später noch genauer eingegangen wird) zu.

Eine erfindungsgemäße Anlage kann eine oder mehrere der erwähnten Reaktionskolonnen umfassen. So ist es durchaus denkbar, dass z. B. zwei oder mehr der Reaktionskolonnen innerhalb einer Anlage parallel zueinander geschaltet sind, um die Geschwindigkeit der Disproportionierung entsprechend zu vervielfältigen.

Die mindestens eine Reaktionskolonne in einer erfindungsgemäßen Anlage ist senkrecht ausgerichtet, so dass die bei den unterschiedlichen Temperaturen betriebenen reaktiv/destillativen Reaktionsbereiche übereinander angeordnet sind. Innerhalb der Reaktionskolonne sinkt die Temperatur dabei vorzugsweise nach oben ab, so dass ein höher angeordneter reaktiv/destillativer Reaktionsbereich in der Regel bei einer niedrigeren Temperatur betrieben wird als ein darunterliegender. Beheizt wird, die Reaktionskolonne in der Regel nur an ihrem unteren Ende. Der tiefstgelegene der reaktiv/destillativen Reaktionsbereiche in einer Reaktionskolonne weist entsprechend üblicherweise die höchste Betriebstemperatur auf.

Ein entscheidender Vorteil der erfindungsgemäßen Anlage gegenüber aus dem Stand der Technik bekannten Vorgehensweise ist nun, dass, wie bereits erwähnt, eben nicht nur ein katalytisch wirkender Feststoff zum Einsatz kommt, sondern mindestens zwei verschiedene. Dabei kann jeder der Feststoffe so ausgewählt werden, dass er auf eine ganz bestimmte Betriebstemperatur abgestimmt ist. So ist es erfindungsgemäß bevorzugt, in einem tiefer liegenden reaktiv/destillativen Reaktionsbereich als Katalysator einen thermisch stabileren Feststoff zu verwenden als in einem höher gelegenen Reaktionsbereich. Die Reaktionskolonne in einer erfindungsgemäßen Anlage lässt sich entsprechend insgesamt bei einer höheren Temperatur betreiben, als es aus dem Stand der Technik bekannt ist. Die Geschwindigkeit der Disproportionierung ist entsprechend gegebenenfalls signifikant höher.

Erfindungsgemäß weist mindestens einer der reaktiv/destillativen Reaktionsbereiche der Reaktionskolonne einer erfindungsgemäßen Anlage einen katalytisch wirkenden Feststoff auf Basis von Vinylpyridin oder einem Vinylpyridin-Derivat auf. Besonders bevorzugt basiert der Feststoff auf einem Copolymer mit Divinylbenzol, also insbesondere auf einem Vinylpyridin-Divinylbenzol-Copolymer. Ein geeignetes katalytisch wirksames Vinylpyridin-Divinylbenzol-Copolymer ist beispielsweise in der US 4,613,489 beschrieben. Mindestens einer der reaktiv/destillativen Reaktionsbereiche der Reaktionskolonne einer erfindungsgemäßen Anlage weist einen katalytisch wirkenden Feststoff auf Basis von Styrol oder einem Styrolderivat, insbesondere auf Basis eines Styrol-Divinylbenzol-Copolymers, auf. Wie bereits eingangs erwähnt, sind solche Harze kommerziell erhältlich und relativ kostengünstig, lassen sich allerdings nur bei beschränkten Temperaturen einsetzen. In einer erfindungsgemäßen Reaktionskolonne kommen sie daher bevorzugt in einem Reaktionsbereich zum Einsatz, dem bereits ein mit einem vergleichsweise temperaturbeständigeren Harz gefüllter weiterer Reaktionsbereich vorgeschaltet ist.

Ihre katalytische Aktivität erhalten die Harze auf Basis von Styrol bzw. auf Basis von Styrol-Divinylbenzol-Copolymeren dadurch, dass sie Amingruppen, insbesondere tertiäre und quartäre Amingruppen, enthalten. Polystyrol- Divinylbenzol-Harze mit tertiären Amingruppen lassen sich nach verschiedenen Verfahren erhalten, die jeweils zu formelmäßig identischen Produkten führen (siehe Ullmanns Enzyklopädie der technischen Chemie, 4. Auflage, Band 13, Weinheim 1997, Seite 301-303). Lediglich beispielhaft sei in diesem Zusammenhang das sogenannte Phthalimid-Verfahren genannt. Bei diesem wird ein mit Divinylbenzol vernetztes Polystyrolharz mit Phthalimid oder einem Phthalimidderivat umgesetzt. Nach Hydrolyse des dabei erhaltenen Produkts, einem primären Polyvinylbenzylamin, erfolgt eine Umsetzung desselben mit Formaldehyd und Ameisensäure. Erhalten wird der erwünschte Katalysator in Form eines Polystyrol-Harzes mit tertiären Aminogruppen.

Eine erfindungsgemäße Anlage weist in Übereinstimmung mit den obigen Ausführungen in besonders bevorzugten Ausführungsformen eine Reaktionskolonne auf,
- die mindestens einen Reaktionsbereich aufweist, der mit einem katalytisch wirkenden Feststoff auf Basis von Vinylpyridin oder einem Vinylpyridin-Derivat, insbesondere mit einem Vinylpyridin-Divinylbenzol-Copolymer, mindestens teilweise befüllt ist und
- mindestens einen Reaktionsbereich, der mit einem katalytisch wirkenden Feststoff auf Basis von Styrol oder einem Styrolderivat, insbesondere auf Basis eines Styrol-Divinylbenzol-Copolymers, befüllt ist.

Der mindestens eine Reaktionsbereich mit dem katalytisch wirkenden Feststoff auf Basis von Vinylpyridin oder dem Vinylpyridin-Derivat ist dabei unterhalb des mindestens einen Reaktionsbereichs mit dem katalytisch wirkenden Feststoff auf Basis von Styrol oder dem Styrolderivat angeordnet.

Die unteren Reaktionsbereiche der Kolonne sind entsprechend thermisch stärker belastbar als die oberen. Nach oben hin sinkt die Temperatur, hier können die billigen lonentauscherharze auf Basis des erwähnten Styrol-Divinylbenzol-Copolymers eingesetzt werden.

Wie oben erwähnt, findet in jedem der Reaktionsbereiche sowohl eine Reaktion als auch eine kontinuierliche destillative Abtrennung von Leichtsiedern (also der monosilanhaltigen Fraktion) statt. Die Leichtsieder können dann in nachgeschaltete reaktiv/destillative Reaktionsbereiche überführt werden, so dass in aller Regel die Konzentration an Monosilan in einer Kolonne nach oben hin zunimmt. Aus dem letzten bzw. oberen Reaktionsbereich in einer Kolonne wird das silanhaltige Produktgemisch dann einem Kondensator zugeführt, der in der Regel so betrieben wird, dass entweder nur Monosilan oder eine monosilanhaltige Fraktion mit möglichst geringen Anteilen an weiteren leichtflüchtigen Komponenten passieren kann. Chlorhaltige Silane sollen nach Möglichkeit durch den Kondensator in der Reaktionskolonne zurückgehalten werden. Aus diesem Grund ist der Kondensator in bevorzugten Ausführungsformen in den Kopf der Reaktionskolonne integriert. Es ist grundsätzlich aber auch möglich, einen separaten, der Kolonne nachgeschalteten Kondensator zu verwenden. Die in einem solchen Kondensator abgetrennten Chlorsilane können über eine Rückführungsleitung wieder der Reaktionskolonne zugeführt werden.

Natürlich kann eine erfindungsgemäße Anlage auch mehrere parallel und/oder in Reihe geschaltete Kondensatoren aufweisen.

Analog zu den obigen Ausführungen wird auch beim erfindungsgemäßen Verfahren zur Herstellung von Monosilan Trichlorsilan katalytisch disproportioniert, wobei die Disproportionierung in mindestens zwei reaktiv/destillativen Reaktionsbereichen durchgeführt wird, die bei unterschiedlichen Temperaturen betrieben werden und die unterschiedliche katalytisch wirkende Feststoffe enthalten, wobei mindestens einer der Reaktionsbereiche einen katalytisch aktiven Feststoff auf Basis von Vinylpyridin und mindestens einer der Reaktionsbereiche einen katalytisch aktiven Feststoff auf Basis von Styrol enthält und wobei das Verfahren in einer senkrecht ausgerichteten Reaktionskolonne (100) durchgeführt wird, in der die Reaktionsbereiche (104; 105) übereinander angeordnet sind und wobei der mindestens eine Reaktionsbereich (104) mit dem katalytisch wirkenden Feststoff auf Basis von Vinylpyridin unterhalb des mindestens einen Reaktionsbereichs (105) mit dem katalytisch wirkenden Feststoff auf Basis von Styrol angeordnet ist. Besonders bevorzugt wird das erfindungsgemäße Verfahren in einer Anlage durchgeführt, wie sie oben beschrieben wurde. Entsprechend kann auf die obigen Ausführungen betreffend die verwendbaren katalytisch wirkenden Feststoffe vollumfänglich verwiesen und Bezug genommen werden.

Wie bereits erwähnt, sind die Katalysatoren auf Basis von Vinylpyridin in der Regel bei höheren Temperaturen einsetzbar als die Katalysatoren auf Basis von Styrol. Im Rahmen eines erfindungsgemäßen Verfahrens ist es bevorzugt, dass die Reaktionsbereiche mit dem katalytisch wirkenden Feststoff auf Basis von Vinylpyridin oder dem Vinylpyridinderivat, insbesondere mit dem Vinylpyridin-Divinylbenzol-Copolymer, bei Temperaturen zwischen 50 °C und 100 °C betrieben werden.

Analog dazu ist es bevorzugt, dass der oder die Reaktionsbereiche mit dem katalytisch wirkenden Feststoff auf Basis von Styrol oder einem Styrolderivat, insbesondere auf Basis eines Styrol-Divinylbenzol-Copolymers, bei Temperaturen zwischen 50 °C und 100 °C betrieben werden.

Der Druck in den Reaktionsbereichen wird in der Regel auf einen Druck im Bereich zwischen 0,1 bar und 20 bar eingestellt.

Die Betriebstemperatur des erwähnten Kondensators liegt vorzugsweise im Bereich zwischen -20 °C und -100 °C.

Weitere Merkmale der Erfindung ergeben sich aus der nachfolgenden Beschreibung von bevorzugten Ausführungsformen in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind keiner Weise einschränkend zu verstehen.

### Figurenbeschreibung:

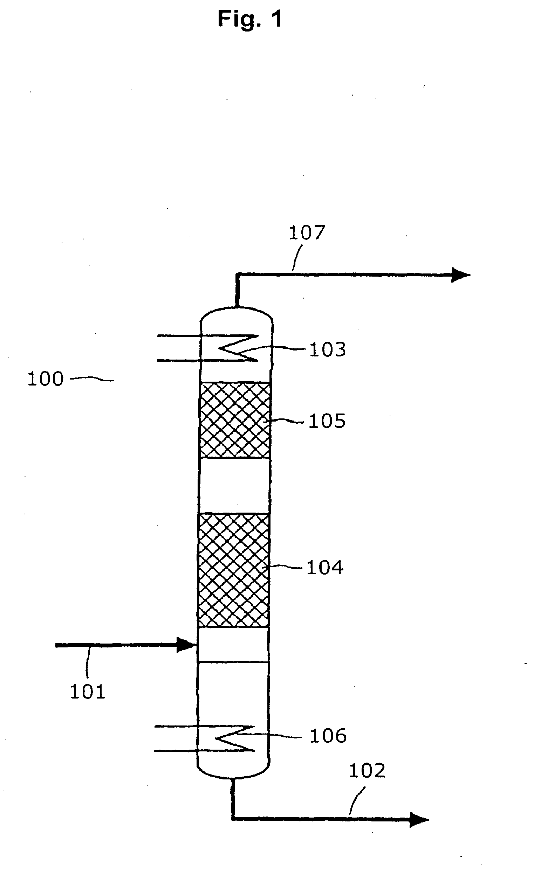

- Fig. 1: zeigt schematisch die Reaktionskolonne einer erfindungsgemäßen Anlage zur Herstellung von Monosilan.

Dargestellt ist die Reaktionskolonne 100, in der Trichlorsilan unter disproportionierenden Bedingungen umgesetzt werden kann. Die Zuführung von Trichlorsilan kann über die Zuleitung 101 erfolgen. Die Reaktionskolonne weist einen Heizbereich 106 auf, in dem die zur Disproportionierung des Trichlorsilans benötigte Energie bereitgestellt wird. Die eigentliche Umsetzung erfolgt in den Reaktionsbereichen 104 und 105. In beiden Reaktionsbereichen sind jeweils katalytisch wirkende Feststoffe enthalten. Der Reaktionsbereich 104 ist mit katalytisch wirkenden Partikeln aus einem Vinylpyridin-Divinylbenzol-Copolymer befüllt, der Reaktionsbereich 105 mit einem kommerziell erhältlichen lonentauscherharz auf Basis eines Styrol-Divinylbenzol-Copolymers mit tertiären Aminogruppen (Amberlyst 21 von Rohm & Haas). Über die Zuleitung 101 in die Kolonne eingeführtes Trichlorsilan wird somit in einem ersten Schritt im Reaktionsbereich 104 umgesetzt, wobei sich ein monosilanhaltiges Produktgemisch bildet, das in den Reaktionsbereich 105 entweichen kann. Umgekehrt sinken Disproportionierungsprodukte mit größerer Dichte und höherem Siedepunkt (Tetrachlorsilan) nach unten ab. Im Reaktionsbereich **105** kann eine zweite, weitergehende Disproportionierung erfolgen, wobei sich der Anteil an Monosilan im umgesetzten Reaktionsgemisch weiter erhöht. Der Kondensator **103,** der in den Kopf der Reaktionskolonne **100** integriert ist, wird bei einer Temperatur unterhalb des Kondensationspunktes von Monochlorsilan betrieben, so dass im wesentlichen nur Monosilan den Kondensator passieren kann. Der Kondensator wirkt entsprechend als Partialkondensator, den im Idealfall lediglich Monosilan passieren kann. Chlorhaltige Silane werden in der Regel durch den Kondensator in der Reaktionskolonne zurückgehalten. Die Abführung von Monosilan kann über die Ableitung **107** erfolgen. Am unteren Ende der Kolonne kann sich ansammelndes Tetrachlorsilan über die Ableitung 102 abgeführt werden.

## Patentansprüche

1. Anlage zur Herstellung von Monosilan (SiH₄) durch katalytische Disproportionierung von Trichlorsilan (SiHCl₃), umfassend eine Reaktionskolonne (100) mit einem Zulauf (101) für Trichlorsilan und einem Ablauf (102) für anfallendes Siliziumtetrachlorid (SiCl₄) sowie mindestens einen Kondensator (103), über den hergestelltes Monosilan aus der Reaktionskolonne abgeführt werden kann, wobei die Reaktionskolonne mindestens zwei reaktiv/destillative Reaktionsbereiche (104; 105) aufweist, die bei unterschiedlichen Temperaturen betrieben werden und die unterschiedliche katalytisch wirkende Feststoffe enthalten, wobei die Reaktionskolonne (100) senkrecht ausgerichtet ist, so dass die bei unterschiedlichen Temperaturen betriebenen Reaktionsbereiche (104; 105) übereinander angeordnet sind, mindestens einer der Reaktionsbereiche einen katalytisch aktiven Feststoff auf Basis von Vinylpyridin und mindestens einer der Reaktionsbereiche einen katalytisch aktiven Feststoff auf Basis von Styrol enthält und der mindestens eine Reaktionsbereich (104) mit dem katalytisch wirkenden Feststoff auf Basis von Vinylpyridin unterhalb des mindestens einen Reaktionsbereichs (105) mit dem katalytisch wirkenden Feststoff auf Basis von Styrol angeordnet ist.

2. Anlage nach Anspruch 1, **dadurch gekennzeichnet, dass** innerhalb der Kolonne (100) die Temperatur nach oben hin absinkt, so dass ein höher angeordneter Reaktionsbereich (105) in der Regel bei einer niedrigeren Temperatur betrieben wird als ein darunter liegender (104).

3. Anlage nach einem der vorhergehenden Ansprüche, **dadurch gekennzeichnet, dass** mindestens ein Reaktionsbereich (104) einen katalytisch wirkenden Feststoff auf Basis eines Vinylpyridin-Divinylbenzol-Copolymers enthält.

4. Anlage nach einem der vorhergehenden Ansprüche, **dadurch gekennzeichnet, dass** mindestens ein Reaktionsbereich (105) einen katalytisch wirkenden Feststoff auf Basis eines Styrol-Divinylbenzol-Copolymers enthält.

5. Anlage nach einem der vorhergehenden Ansprüche, **dadurch gekennzeichnet, dass** der Kondensator (103) in den Kopf der Reaktionskolonne (100) integriert ist.

6. Verfahren zur Herstellung von Monosilan (SiH₄) durch katalytische Disproportionierung von Trichlorsilan (SiHCl₃), wobei die Disproportionierung in mindestens zwei reaktiv/destillativen Reaktionsbereichen (104; 105) durchgeführt wird, die bei unterschiedlichen Temperaturen betrieben werden und die unterschiedliche katalytisch wirkende Feststoffe enthalten, wobei mindestens einer der Reaktionsbereiche einen katalytisch aktiven Feststoff auf Basis von Vinylpyridin und mindestens einer der Reaktionsbereiche einen katalytisch aktiven Feststoff auf Basis von Styrol enthält und wobei das Verfahren in einer senkrecht ausgerichteten Reaktionskolonne (100) durchgeführt wird, in der die Reaktionsbereiche (104; 105) übereinander angeordnet sind und wobei der mindestens eine Reaktionsbereich (104) mit dem katalytisch wirkenden Feststoff auf Basis von Vinylpyridin unterhalb des mindestens einen Reaktionsbereichs (105) mit dem katalytisch wirkenden Feststoff auf Basis von Styrol angeordnet ist.

7. Verfahren nach Anspruch 6, **dadurch gekennzeichnet, dass** es in einer Anlage gemäß einem der Ansprüche 1 bis 5 durchgeführt wird.

8. Verfahren nach Anspruch 7, **dadurch gekennzeichnet, dass** der Reaktionsbereich (104) mit dem katalytisch wirkenden Feststoff auf Basis von Vinylpyridin bei Temperaturen zwischen 50 °C und 200 °C betrieben wird.

9. Verfahren nach Anspruch 7 oder Anspruch 8, **dadurch gekennzeichnet, dass** der Reaktionsbereich (105) mit dem katalytisch wirkenden Feststoff auf Basis von Styrol bei Temperaturen zwischen 50 °C und 100 °C betrieben wird.

10. Verfahren nach einem der Ansprüche 6 bis 9, **dadurch gekennzeichnet, dass** der Druck in den Reaktionsbereichen (104; 105) auf einen Druck im Bereich zwischen 0,1 bar und 20 bar eingestellt wird.

11. Verfahren nach einem der Ansprüche 7 bis 10, **dadurch gekennzeichnet, dass** der Kondensator (103) bei einer Temperatur zwischen -20 °C und -100 °C betrieben wird.

## Claims

1. System for preparing monosilane (SiH₄) by catalytic disproportionation of trichlorosilane (SiHCl₃), comprising a reaction column (100) having a feed line (101) for trichlorosilane and a discharge line (102) for obtained silicon tetrachloride (SiCl₄) and at least one condenser (103) via which produced monosilane can be discharged from the reaction column, wherein the reaction column has at least two reactive/distillative reaction regions (104; 105) which are operated at different temperatures and contain different catalytically active solids, wherein the reaction column (100) is aligned vertically so that the reaction regions (104; 105) operated at different temperatures are arranged one above the other, at least one of the reaction regions contains a catalytically active solid based on vinylpyridine and at least one of the reaction regions contains a catalytically active solid based on styrene and the at least one reaction region (104) containing the catalytically active solid based on vinylpyridine is arranged below the at least one reaction region (105) containing the catalytically active solid based on styrene.

2. System according to claim 1, **characterised in that** within the column (100) the temperature decreases in an upward direction so that a reaction region (105) located higher up is generally operated at a lower temperature than a reaction region (104) located underneath.

3. System according to any one of the preceding claims, **characterised in that** at least one reaction region (104) contains a catalytically active solid based on a vinylpyridinedivinylbenzene copolymer.

4. System according to any one of the preceding claims, **characterised in that** at least one reaction region (105) contains a catalytically active solid based on a styrenedivinylbenzene copolymer.

5. System according to any one of the preceding claims, **characterised in that** the condenser (103) is integrated into the top of the reaction column (100).

6. Method for preparing monosilane (SiH₄) by catalytic disproportionation of trichlorosilane (SiHCl₃), wherein the disproportionation is carried out in at least two reactive/distillative reaction regions (104; 105) which are operated at different temperatures and contain different catalytically active solids, wherein at least one of the reaction regions contains a catalytically active solid based on vinylpyridine and at least one of the reaction regions contains a catalytically active solid based on styrene, and wherein the method is carried out in a vertically aligned reaction column (100) in which the reaction regions (104; 105) are arranged one above the other and wherein the at least one reaction region (104) containing the catalytically active solid based on vinylpyridine is arranged below the at least one reaction region (105) containing the catalytically active solid based on styrene.

7. Method according to claim 6, **characterised in that** it is carried out in a system according to any one of the claims 1 to 5.

8. Method according to claim 7, **characterised in that** the reaction region (104) containing the catalytically active solid based on vinylpyridine. is operated at temperatures in the range from 50 °C to 200 °C.

9. Method according to claim 7 or claim 8, **characterised in that** the reaction region (105) containing the catalytically active solid based on styrene is operated at temperatures in the range from 50 °C to 100 °C.

10. Method according to any one of the claims 6 to 9, **characterised in that** the pressure in the reaction regions (104; 105) is set to a pressure in the range from 0.1 bar to 20 bar.

11. Method according to any one of the claims 7 to 10, **characterised in that** the condenser (103) is operated at a temperature in the range from -20 °C to -100 °C.

## Revendications

1. Unité pour la fabrication de monosilane (SiH4) par dismutation catalytique de trichlorosilane (SiHCl₃), comprenant une colonne de réaction (100) munie d'une entrée (101) pour le trichlorosilane et d'une sortie (102) pour le tétrachlorure de silicium (SiCl₄) formé, ainsi qu'au moins un condensateur (103) par le biais duquel le monosilane fabriqué peut être déchargé de la colonne de réaction, la colonne de réaction comprenant au moins deux zones de réaction réactives/distillatives (104 ; 105), qui sont exploitées à des températures différentes et qui contiennent des solides catalytiquement actifs différents, la colonne de réaction (100) étant orientée verticalement, de manière à ce que les zones de réaction (104 ; 105) exploitées à des températures différentes soient agencées les unes sur les autres, au moins une des zones de réaction contenant un solide catalytiquement actif à base de vinylpyridine et au moins une des zones de réaction contenant un solide catalytiquement actif à base de styrène, et la ou les zones de réaction (104) contenant le solide catalytiquement actif à base de vinylpyridine étant agencées en dessous de la ou des zones de réaction (105) contenant le solide catalytiquement actif à base de styrène.

2. Unité selon la revendication 1, **caractérisée en ce que** la température dans la colonne (100) diminue vers le haut, de manière à ce qu'une zone de réaction (105) agencée plus haut soit généralement exploitée à une température plus basse qu'une zone située en dessous (104).

3. Unité selon l'une quelconque des revendications précédentes, **caractérisée en ce qu'**au moins une zone de réaction (104) contient un solide catalytiquement actif à base d'un copolymère de vinylpyridine-divinylbenzène.

4. Unité selon l'une quelconque des revendications précédentes, **caractérisée en ce qu'**au moins une zone de réaction (105) contient un solide catalytiquement actif à base d'un copolymère de styrène-divinylbenzène.

5. Unité selon l'une quelconque des revendications précédentes, **caractérisée en ce que** le condensateur (103) est intégré dans la tête de la colonne de réaction (100).

6. Procédé de fabrication de monosilane (SiH4) par dismutation catalytique de trichlorosilane (SiHCl₃), la dismutation étant réalisée dans au moins deux zones de réaction réactives/distillatives (104 ; 105), qui sont exploitées à des températures différentes et qui contiennent des solides catalytiquement actifs différents, au moins une des zones de réaction contenant un solide catalytiquement actif à base de vinylpyridine et au moins une des zones de réaction contenant un solide catalytiquement actif à base de styrène, et le procédé étant réalisé dans une colonne de réaction (100) orientée verticalement, dans laquelle les zones de réaction (104 ; 105) sont agencées les unes sur les autres, la ou les zones de réaction (104) contenant le solide catalytiquement actif à base de vinylpyridine étant agencées en dessous de la ou des zones de réaction (105) contenant le solide catalytiquement actif à base de styrène.

7. Procédé selon la revendication 6, **caractérisé en ce qu'**il est réalisé dans une unité selon l'une quelconque des revendications 1 à 5.

8. Procédé selon la revendication 7, **caractérisé en ce que** la zone de réaction (104) contenant le solide catalytiquement actif à base de vinylpyridine est exploitée à des températures comprises entre 50 °C et 200 °C.

9. Procédé selon la revendication 7 ou la revendication 8, **caractérisé en ce que** la zone de réaction (105) contenant le solide catalytiquement actif à base de styrène est exploitée à des températures comprises entre 50 °C et 100 °C.

10. Procédé selon l'une quelconque des revendications 6 à 9, **caractérisé en ce que** la pression dans les zones de réaction (104 ; 105) est ajustée à une pression dans la plage comprise entre 0,1 bar et 20 bar.

11. Procédé selon l'une quelconque des revendications 7 à 10, **caractérisé en ce que** le condensateur (103) est exploité à une température comprise entre -20 °C et -100 °C.
